# EUROPÄISCHE PATENTANMELDUNG

(11) **EP 3 040 572 A1**
(43) Veröffentlichungstag der Anmeldung: **06.07.2016**
(21) Anmeldenummer: 15182326.7
(22) Anmeldetag: 25.08.2015
(51) Int. Cl.: F16D 51/50, B60T 7/20, F16D 65/56, F16D 125/60, F16D 125/64

(54) **TROMMELBREMSE FÜR EIN FAHRZEUG SOWIE BREMSBACKENPAAR FÜR EINE TROMMELBREMSE**

(30) Priorität: 08.12.2014 DE 102014118157
(71) Anmelder: BPW FAHRZEUGTECHNIK GmbH & CO. KG, 33104 Paderborn (DE)
(72) Erfinder: Schmidt, Peter, 33100 Paderborn (DE); Kamm, Michael, 52223 Stolberg (DE); Müller, Matthias, 51105 Köln (DE); Brüntrup, Andreas, 33098 Paderborn (DE); Heidrich, Philipp, 32657 Lemgo (DE); Glinka, Oliver, 89081 Ulm (DE)
(74) Vertreter: Bungartz Christophersen Partnerschaft mbB Patentanwälte

(57) **Zusammenfassung**

Vorgeschlagen wird eine Trommelbremse für ein Fahrzeug mit
- einer auf einer Drehachse (A) gelagerten Bremstrommel,
- einem achsfest angeordneten Bremsschild (3),
- einer erste Bremsbacke (1), die in Umfangsrichtung beweglich angeordnet und mit einem über einen Umfangsabschnitt sich erstreckenden Reibbelag (11) versehen ist, sowie einer zweiten Bremsbacke (2), die in Umfangsrichtung beweglich angeordnet und mit einem über einen Umfangsabschnitt sich erstreckenden Reibbelag (12) versehen ist,
- einer durch ein Bremsorgan (6), vorzugsweise ein Bremsseil, betätigbaren Spreizeinrichtung (5), welche mit einem ersten Druckstück (21) gegen das erste Ende (1A) der ersten Bremsbacke (1), und mit einem zweiten Druckstück (22) gegen das erste Ende (2A) der zweiten Bremsbacke (2) abgestützt ist,
- einer die zweite Bremsbacke (2) gegen die Spreizeinrichtung (5) beaufschlagenden Feder (10),
- einer Rückfahrautomatik zum zumindest teilweisen Aufheben der Bremswirkung bei Rückwärtsfahrt des Fahrzeugs.

Um die Funktion einer Rückfahrautomatik mit der Möglichkeit einer gewichtssparenden und kompakten Bauweise zu verbinden ist das Bremsschild (3) zur Begrenzung der Beweglichkeit der Bremsbacken (1, 2) in Umfangsrichtung mit einem ersten Anschlag (51) zur Abstützung des ersten Bremsbackenendes (1A) der ersten Bremsbacke (1) bei Rückwärtsfahrt (R) und mit einem zweiten Anschlag (52) zur Abstützung des ersten Bremsbackenendes (2A) der zweiten Bremsbacke (2) bei Vorwärtsfahrt (V) versehen. Ein relativ zu dem Bremsschild (3) frei bewegliches Schubelement (4) liegt mit einer ersten Abstützung (41) gelenkig gegen das zweite Ende (1 B) der ersten Bremsbacke (1) und mit einer zweiten Abstützung (42) gelenkig gegen die zweite Bremsbacke (2) an.

## Beschreibung

Die Erfindung betrifft eine Trommelbremse für ein Fahrzeug und insbesondere für ein mit einer Auflaufbremse versehenes Anhängerfahrzeug. Die Erfindung betrifft ferner ein für den Einsatz in einer solchen Bremse geeignetes Paar Bremsbacken.

Bei Radbremsen mit Auflaufeinrichtung, wie sie z. B. aus der EP 0 482 430 B1, der WO 2007/093399 A1 und der EP 2 514 646 A2 bekannt sind, sind die beiden von Innen gegen die Bremstrommel beaufschlagbaren Bremsbacken an ihren ersten Enden über eine Spreizeinrichtung miteinander verbunden. In die Spreizeinrichtung integriert ist eine Nachstelleinrichtung aus einem Nachstellzahnrad und einem außen an der Spreizeinrichtung gelagerten Nachstellhebel. Mit Betätigung der Radbremse wird zugleich der Nachstellhebel verschwenkt, wodurch er in das Nachstellzahnrad eingreift und im Falle eines aufgetretenen Bremsverschleißes den Nachstellmechanismus weiterschaltet mit der Folge, dass fortan die wirksame Spreizbreite der Spreizeinrichtung vergrößert ist.

Im Bereich der beiden anderen Enden der Bremsbacken ist bei der EP 0 482 430 B1 ein Widerlager an dem Bremsschild befestigt, an dem sich diese zweiten Bremsbackenenden ortsfest abstützen. Diese ortsfeste Abstützung bei der WO 2007/093399 A1 und der EP 2 514 646 A2 zwecks Realisierung einer Rückfahrautomatik dahin weiterentwickelt, dass sich eine der beiden Backen an einem Nocken abstützt, der im Falle der Rückwärtsfahrt nach innen ausweicht. Dadurch kommt es zu einem gegenseitigen Annähern dieser Bremsbackenenden und damit zu einem Aufheben der Bremswirkung.

Durch das genannte Ausweichen bei Rückwärtsfahrt kommt es aber auch zu einem vergrößerten Bremsbetätigungshub an der Spreizeinrichtung, was ohne geeignete Ausgleichsmaßnahmen eine unerwünschte Nachstellung zur Folge hätte. Um dies zu vermeiden, ist z. B. bei der WO 2007/093399 A1 die Nachstelleinrichtung mit einer Löseeinrichtung in Gestalt eines außen an der Spreizeinrichtung gelagerten Hebels versehen. Dieser löst bei stark vergrößertem Bremsbetätigungshub den Eingriff des Nachstellhebels in das Nachstellzahnrad.

Der Erfindung liegt die Aufgabe zugrunde, bei einer gattungsgemäßen Trommelbremse die Funktion einer Rückfahrautomatik mit der Möglichkeit einer gewichtssparenden und kompakten Bauweise zu verbinden.

Zur Lösung dieser Aufgabe wird eine Trommelbremse mit den Merkmalen des Patentanspruchs 1 sowie ein Bremsbackenpaar mit den Merkmalen des Patentanspruchs 14 vorgeschlagen. Ausgestaltungen sind in den jeweiligen Unteransprüchen angegeben.

Bei dieser Trommelbremse haben die darin paarweise zum Einsatz kommenden Bremsbacken deutliche Bewegungs-Freiheitsgrade in Umfangsrichtung, die beiden Bremsbacken bleiben jedoch miteinander gekoppelt. Erreicht wird dies unter anderem durch ein Schubelement im Bereich der zweiten Enden der Bremsbacken, wobei dieses Schubelement relativ zu dem achsfesten Bremsschild frei beweglich angeordnet ist. Das Schubelement verhält sich in Richtung seiner Längserstreckung starr und ist mit einer ersten Abstützung gelenkig gegen das zweite Ende der ersten Bremsbacke, und mit einer zweiten Abstützung gelenkig gegen die zweite Bremsbacke abgestützt. Das Schubelement benötigt keine Verbindung zu dem Bremsschild, da in diesem Bereich der Bremse keine Kräfte auf das Bremsschild abgeführt werden. Daher kann das Bremsschild klein und somit gewichtssparend gestaltet sein. Insbesondere reicht für das sichere Abführen aller Bremskräfte auf die Fahrzeugachse bereits ein Bremsschild aus, das sich im Wesentlichen auf den Bereich um die Spreizeinrichtung herum beschränkt und allenfalls noch um eine Backenabstützung in Achsrichtung ergänzt ist. Um auch bei teilweisem Wegfall des Bremsschilds die übrige Fläche der Trommelbremse nach Fahrzeuginnen hin abzudecken, z. B. gegen ein Eindringen von Schmutz oder Steinschlag in das Innere der Trommelbremse, reicht ein einfaches dünnwandiges und daher wenig Gewicht beanspruchendes Abdeckblech aus.

Da im Bereich der zweiten Enden der Bremsbacken kein ortsfestes Widerleger vorhanden ist, andererseits die Beweglichkeit der Bremsbacken in Umfangsrichtung begrenzt werden muss, ist das Bremsschild mit einem ersten Anschlag zur Abstützung des ersten Bremsbackenendes der ersten Bremsbacke bei Rückwärtsfahrt, und mit einem zweiten Anschlag zur Abstützung des ersten Bremsbackenendes der zweiten Bremsbacke bei Vorwärtsfahrt versehen. Diese beiden Anschläge sind im Bereich um die Spreizeinrichtung herum am Bremsschild ausgebildet und befinden sich also dort, wo sich die ersten Enden der Bremsbacken befinden. Auch dies trägt zur Kompaktheit des Bremsschildes bei, und damit zu einem geringen Gewicht der Radbremse.

Von Vorteil ist außerdem, dass bei der beschriebenen Radbremse eine automatische Nachstellung, sofern vorhanden, unabhängig von der Rückfahrautomatik arbeiten kann. Die Nachstellung arbeitet also nur im Falle eines tatsächlich verschleißbedingt vergrößerten Lüftspiels. Da die zwei Bremsbacken bei Vorwärts- wie bei Rückwärtsfahrt aufgrund ihrer Kopplung über das Schubelement im Wesentlichen die gleichen Bremsbackenbewegungen durchführen, kann die Nachstellung entweder beim Vorhub, d. h. bei Belastung der Bremse, oder im Rückhub, d. h. bei Entlastung der Bremse, erfolgen. Zusätzliche Bauteile, um die automatische Nachstellung im Falle einer Rückwärtsfahrt auszuschalten oder aufzuheben, werden nicht benötigt, da keine überlagerten Bewegungen der Rückfahrautomatik einerseits und der Nachstellautomatik andererseits stattfinden.

Sofern sich die Bremsbacken des Bremsbackenpaars in an und für sich bekannter Bauart jeweils aus einem kreissegmentförmig gebogenen Reibbelagträger und einem an dessen Innenseite befestigten Bremsbackensteg zusammensetzen, ist eine Ausführungsform von Vorteil, bei der Bestandteil jeder der beiden Abstützungen ein Bolzen ist, der durch den jeweiligen Bremsbackensteg hindurchgeführt ist.

Eine automatisch arbeitende Nachstelleinrichtung für das Lüftspiel zwischen den Bremsbacken lässt sich baulich relativ einfach ergänzen, eventuell sogar nachrüsten. Von Vorteil ist es, wenn Bestandteil dieser Nachstelleinrichtung ein Antriebselement eines Getriebes ist, mit dem sich die Länge des Schubelements verändern lässt. Für eine kompakte Integration in das Schubelement kann das Getriebe einen Gewindetrieb aufweisen, der in dem Schubelement auf der Verbindungslinie zwischen den beiden Abstützungen angeordnet ist. Bestandteil der Nachstelleinrichtung kann ferner ein in eine Verzahnung an dem Antriebselement hinein beweglicher Nachstellhebel sein, wobei ein Mechanismus zum Umsetzen des Spreizens der Bremsbacken in eine Bewegung des Nachstellhebels vorgesehen ist.

Hinsichtlich der in der beschriebenen Radbremse verwendeten Spreizeinrichtung wird vorgeschlagen, dass diese aufweist
- einen Spreizhebel, der um eine an dem Bremsschild ortsfest angeordnete Achse drehbeweglich ist und mit einem längeren Hebelabschnitt, an dem das Spreizorgan abgestützt ist, und einem kürzeren Hebelabschnitt versehen ist,
- einen gegen eine der beiden Bremsbacken abgestützten, zweiarmigen Umlenkhebel, gegen dessen einen Hebelarm der kürzere Hebelabschnitt des Spreizhebels abgestützt ist,
- einen gegen die andere der beiden Bremsbacken abgestützten Spreizarm, der gelenkig mit dem Umlenkhebel verbunden ist.

Bei dieser Bauart der Spreizeinrichtung kann der kürzere Hebelabschnitt mittels eines Zugelements gegen den Hebelarm des Umlenkhebels abgestützt sein, wobei das Zugelement z. B. ein Kettenglied einer Gliederkette sein kann. Dadurch ist dem Umlenkhebel ein Maximum an Beweglichkeit relativ zu dem Spreizhebel möglich. Dies hat den Vorteil, das vor allem in Spreizrichtung eine kontaktfreie Zone für den Ausgleich starker Bewegungen, unerwarteter Stöße etc. bleibt.

In Bezug auf die Spreizeinrichtung wird mit einer weiteren Ausgestaltung vorgeschlagen, dass der Umlenkhebel mit seinem anderen Hebelarm direkt gegen die eine der beiden Bremsbacken abgestützt ist.

Für eine kompakte Bauweise der Spreizeinrichtung wird vorgeschlagen, dass sich der Spreizarm längs des längeren Hebelabschnitts des Spreizhebels erstreckt.

Der Umlenkhebel kann an seiner der Achse des Spreizhebels abgewandten Seite mit einer Ausnehmung versehen sein, wobei er mit der Ausnehmung gegen die Bremsbacke abgestützt ist, um auf diese Druck auszuüben.

Ferner wird vorgeschlagen, dass diejenige Bremsbacke, gegen die der Spreizarm abgestützt ist, die zweite Bremsbacke, und diejenige Bremsbacke, gegen die der Umlenkhebel abgestützt ist, die erste Bremsbacke ist.

Von Vorteil bei der hier beschriebenen Spreizeinrichtung ist ihre gegenüber dem Bremsschild "schwimmende" Anordnung. Denn nur der Spreizhebel ist auf der an dem Bremsschild ortsfest angeordneten Achse drehgelagert. Hingegen ist im Zusammenwirken der Einzelteile der Spreizeinrichtung den beiden gegen die Bremsbacken abgestützten Druckstücken, also einerseits dem Spreizarm und andererseits dem nach Art einer Wippe gestalteten Umlenkhebel, ein Bewegungsausgleich in Bremstrommel-Umfangsrichtung möglich, wobei die Druckstücke gleichsinnige Bewegungen entweder beide in die eine oder beide in die andere Umfangsrichtung ausführen. Ferner ist auch ein Bewegungsausgleich quer zur Spreizrichtung gewährleistet.

Weitere Einzelheiten und Vorteile der Erfindung ergeben sich aus der nachfolgenden Beschreibung dreier Ausführungsbeispiele, wobei in den Figuren 1 - 5 eine erste Ausführungsform, in den Figuren 6 - 9 eine zweite Ausführungsform, und in den Figuren 10 - 14 eine dritte Ausführungsform wiedergegeben ist. Im Einzelnen zeigen:

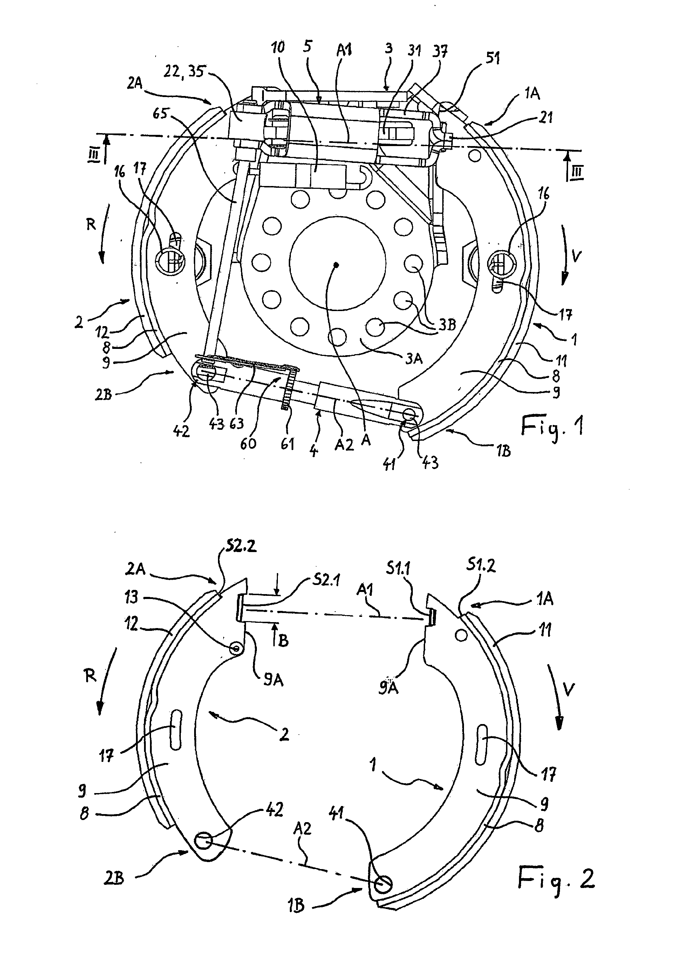

- Fig. 1: in einer Ansicht in Achsrichtung eine Trommelbremse für ein Anhängerfahrzeug, allerdings ohne Wiedergabe der Bremstrommel;
- Fig. 2: die beiden Bremsbacken der in Fig. 1 wiedergegebenen Trommelbremse;

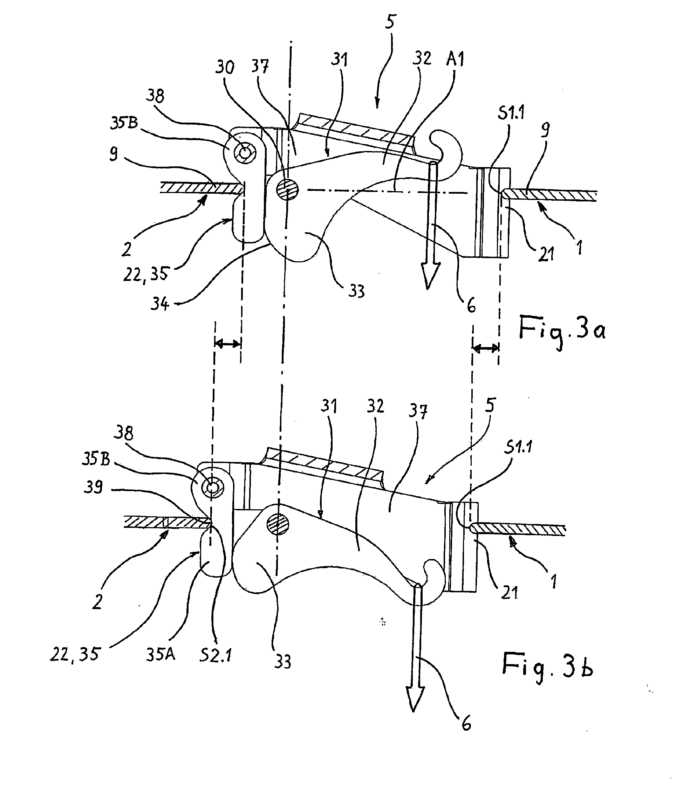

- Fig. 3a: einen vereinfachten Längsschnitt durch die Spreizeinrichtung der Trommelbremse gemäß der in Fig. 1 eingetragenen Schnittebene III-III, wobei die Spreizeinrichtung in passivem Zustand wiedergegeben ist;
- Fig. 3b: denselben Längsschnitt wie Fig. 3a in aktivem Zustand der Spreizeinrichtung;

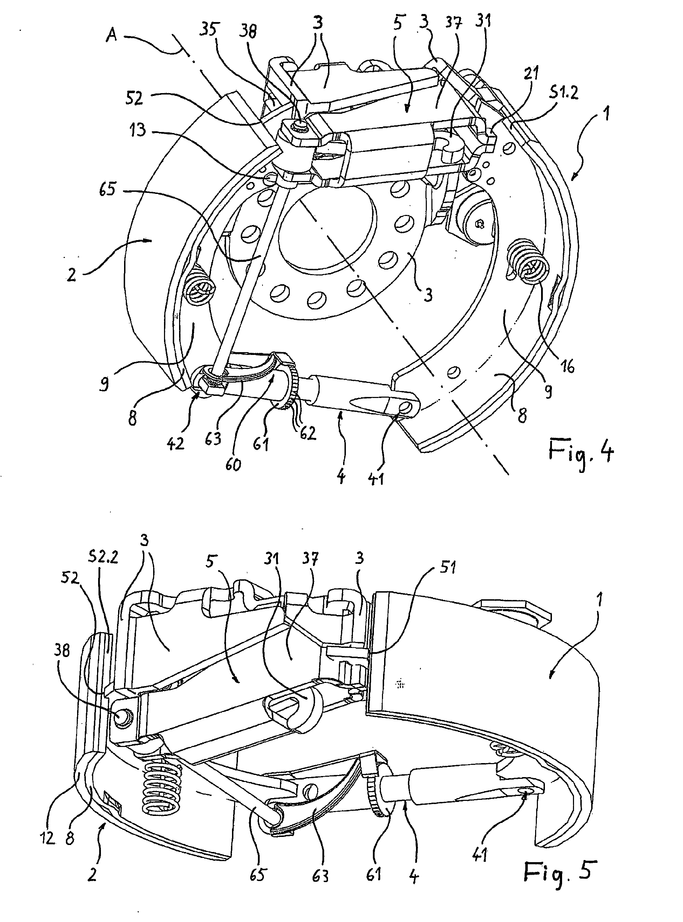

- Fig. 4: eine perspektivische Ansicht der Trommelbremse;
- Fig. 5: eine weitere perspektivische Ansicht der Trommelbremse;

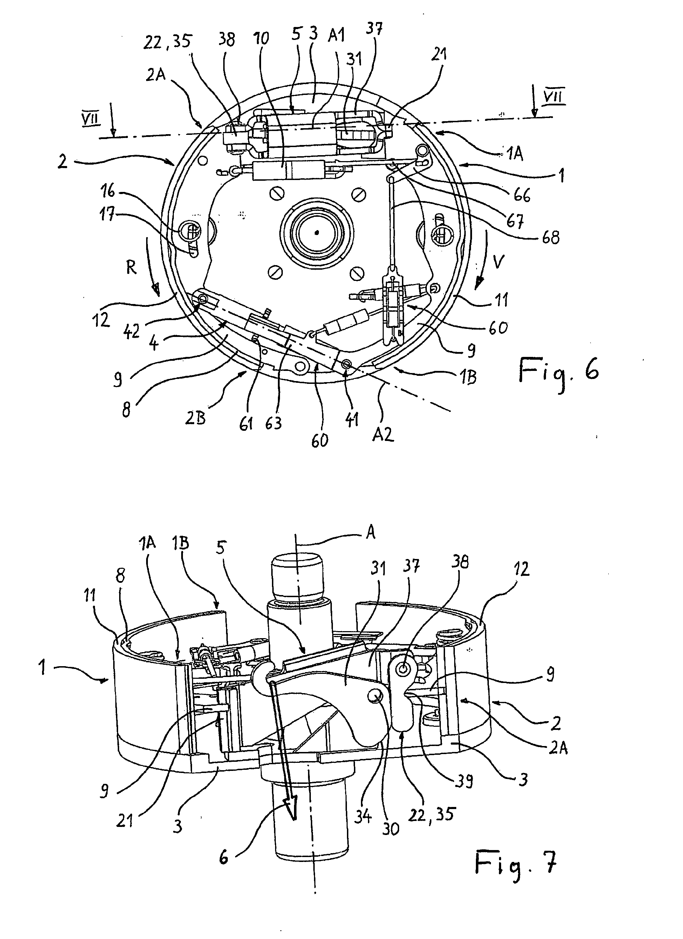

- Fig. 6: in einer Ansicht in Achsrichtung die zweite Ausführungsform der Trommelbremse, wiederum ohne Wiedergabe der Bremstrommel;
- Fig. 7: einen leicht perspektivisch angesetzten Schnitt entsprechend der in Fig. 6 eingetragenen Ansichtsebene VII-VII;

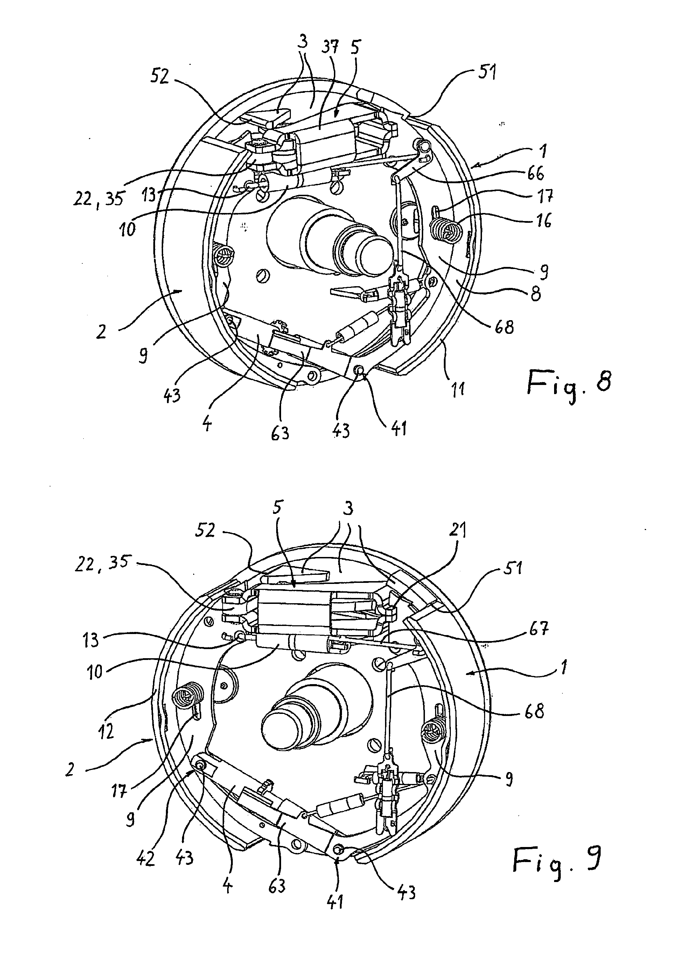

- Fig. 8: die Trommelbremse nach Fig. 6 in einer perspektivischen Ansicht;
- Fig. 9: die Trommelbremse nach Fig. 6 in einer weiteren perspektivischen Ansicht;

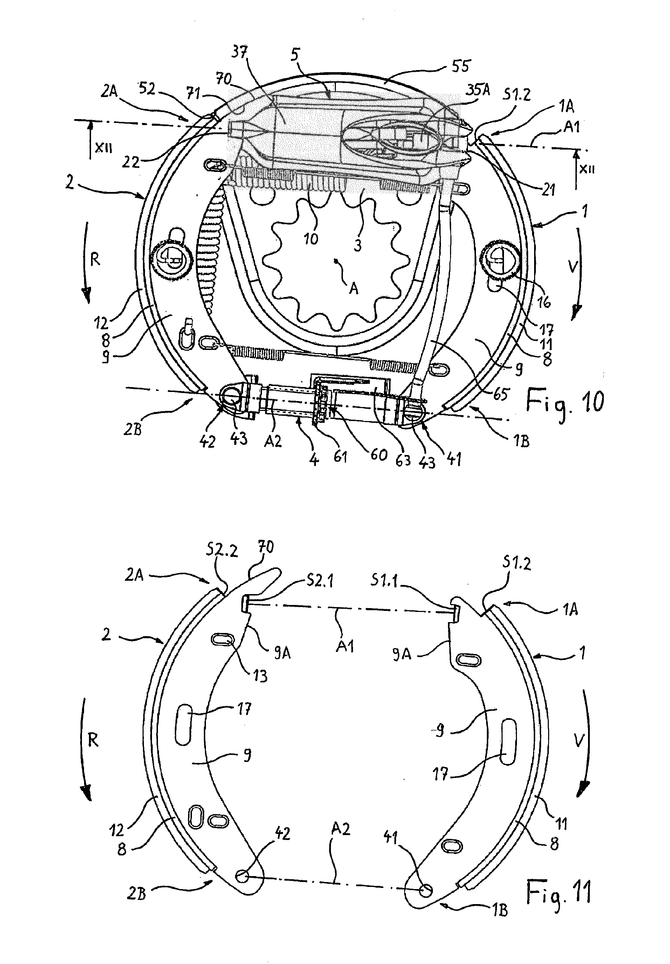

- Fig. 10: in einer Ansicht in Achsrichtung die dritte Ausführungsform der Trommelbremse, wiederum ohne Wiedergabe der Bremstrommel;
- Fig. 11: die beiden Bremsbacken der in Fig. 10 wiedergegebenen Trommelbremse;

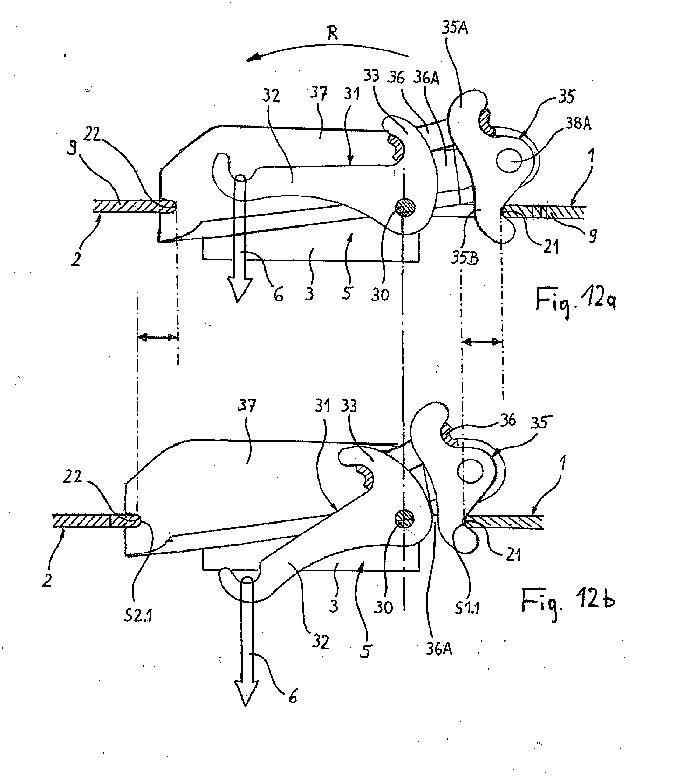

- Fig. 12a: einen vereinfachten Längsschnitt durch die Spreizeinrichtung der Trommelbremse gemäß der in Fig. 10 eingetragenen Schnittebene XII-XII, wobei die Spreizeinrichtung in passivem Zustand wiedergegeben ist;
- Fig. 12b: denselben Längsschnitt wie Fig. 12a in aktivem Zustand der Spreizeinrichtung;

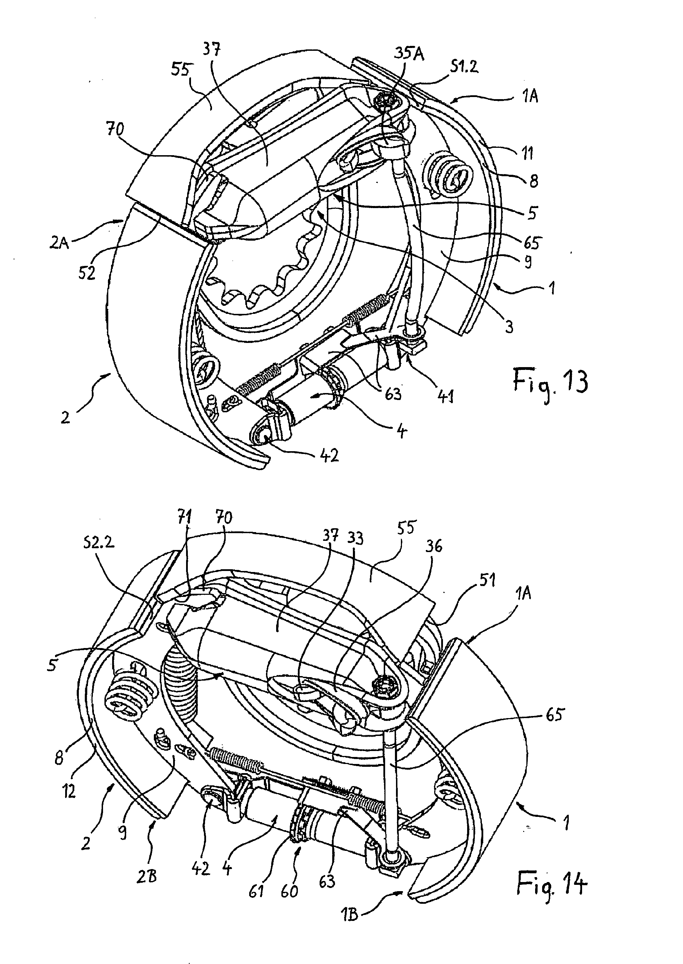

- Fig. 13: eine perspektivische Ansicht der Trommelbremse, und
- Fig. 14: eine weitere perspektivische Ansicht der Trommelbremse.

Die Figuren 1 - 5 zeigen in einer ersten Ausführungsform eine Trommelbremse, wie sie als Radbremse für solche Anhängerfahrzeuge wie z. B. Wohnanhänger Verwendung findet, die mit einer Auflaufbremse und mit einer in die Trommelbremse integrierten Rückfahrautomatik versehen sind. Aus Gründen der Übersicht ist die umgebende Bremstrommel der Trommelbremse jeweils nicht wiedergegeben, wobei diese Bremstrommel allerdings wie allgemein üblich gestaltet sein kann, z. B. wie in der WO 2007/093399 A1 beschrieben.

Hauptbestandteile der Radbremse sind ein an der Fahrzeugachse des Fahrzeugs befestigter Bremsschild 3, eine erste Bremsbacke 1, eine zweite Bremsbacke 2, eine Spreizeinrichtung 5 im Bereich der ersten Enden 1A, 2A der Bremsbacken 1, 2, und ein Schubelement 4 im Bereich der zweiten Enden 1B, 2B der Bremsbacken 1, 2. Die im Bremsbetrieb auflaufende Bremsbacke 2 ist hier in Umfangsrichtung kürzer ausgebildet, als die Bremsbacke 1.

Das stabil gestaltete Bremsschild 3 weist einen Flansch 3A mit Befestigungsstrukturen 3B auf hier einem Lochkreis, mit denen das Bremsschild 3 fest an der Fahrzeugachse oder einem Element der Fahrzeugachse montierbar ist. An dem Bremsschild 3 ist die durch ein Bremsorgan 6, üblicherweise das Bremsseil der Auflaufbremse des Fahrzeuganhängers, betätigbare Spreizeinrichtung 5 angeordnet. Die Spreizeinrichtung 5 ist auf einer Spreizlinie A1 angeordnet, die sich zwischen den im Einbauzustand einander zugewandten ersten Enden 1A, 2A der Bremsbacken 1, 2 erstreckt. Die ersten Enden 1A, 2A sind auf den Zeichnungen jeweils oben angeordnet, was jedoch nicht technisch zwingend ist.

Die Spreizeinrichtung 5 liegt mit einem ersten Druckstück 21 gegen eine Abstützung S1.1 an, mit der gemäß Fig. 2 die erste Bremsbacke 1 im Bereich ihres ersten Endes 1A versehen ist. Die Spreizeinrichtung 5 liegt ferner mit einem zweiten Druckstück 22 gegen eine Abstützung S2.1 an, mit der die zweite Bremsbacke 2 im Bereich ihres ersten Endes 2A versehen ist. Gemäß Fig. 2 befinden sich die beiden gegen die Spreizeinrichtung 5 anliegenden Abstützungen S1.1 und S2.1 jeweils an Bremsbackenstegen 9 der Bremsbacken 1, 2. Die beiden Bremsbackenstege 9 sind zu diesem Zweck jeweils mit zueinander gerichteten Rändern 9A versehen, an denen sich jeweils eine Einsenkung befindet. Der Boden dieser Einsenkung ist die bremsbackenseitige Abstützung S1.1 bzw. S2.1 für die Druckstücke 21 bzw. 22.

Da sich an der Abstützung S2.1 der auflaufenden Bremsbacke 2 ein im Folgenden noch beschriebener Umlenkhebel abstützt, der aus Festigkeitsgründen nicht zu schmal sein sollte, weist die Abstützung S2.1 eine größere Breite B als die Abstützung S1.1 an der Bremsbacke 1 auf.

Die beiden Bremsbacken 1, 2 setzen sich jeweils aus einem nach außen gekrümmten Reibbelagträger 8 und dem an dessen Innenseite befestigten Bremsbackensteg 9 zusammen. Die Bremsbackenstege 9 beider Bremsbacken 1, 2 erstrecken sich in derselben Ebene. Statt nur eines solchen Stegs können aus Festigkeitsgründen an jeder Bremsbacke 1, 2 auch zwei zueinander parallele Bremsbackenstege vorhanden sein.

Die Bremsbacke 1 ist in Umfangsrichtung beweglich angeordnet. Sie ist außen auf ihrem kreissegmentförmig gekrümmten Belagträger 8 mit einem über einen ersten Umfangsabschnitt sich erstreckenden Reibbelag 11 versehen. Auch die andere Bremsbacke 2 ist in Umfangsrichtung beweglich angeordnet, und ist außen auf ihrem Belagträger 8 mit einem über einen zweiten Umfangsabschnitt sich erstreckenden Reibbelag 12 versehen.

Eine Feder 10 ist vorhanden, um die zweite Bremsbacke 2 stets zu der Spreizeinrichtung 5 hin zu ziehen. Die Feder 10 ist hier als eine Zugfeder ausgebildet, die mit ihrem einen Ende an dem festen Bremsschild 3 befestigt ist. Ihr anderes, ziehendes Ende ist an der zweiten Bremsbacke 2 nahe der Abstützung S2.1 befestigt, wozu die Bremsbacke 2 dort mit einer Federbefestigung 13 versehen ist. Als Federbefestigung 13 dient eine runde oder ovale Öffnung in dem Bremsbackensteg 9 der zweiten Bremsbacke, in die die Feder 10 eingehängt ist (Fig. 2).

An beiden Bremsbacken 1, 2 sind Maßnahmen getroffen, um diese grob in Axialrichtung, d. h. in Richtung der Drehachse A der Bremstrommel, zu sichern, ohne jedoch das Spiel der Bremsbacken zu stark einzuschränken. Erreicht wird dies über am Bremsschild 3 angeordnete Federn 16, welche die Bremsbacken 1, 2 in Axialrichtung grob positionieren. Da andererseits beide Bremsbacken 1, 2 in Umfangsrichtung einen deutlichen Bewegungs-Freiheitsgrad gegenüber dem Bremsschild 3 aufweisen müssen, greifen die Federn 16 durch in den Bremsbackenstegen 9 ausgebildete Langlöcher 17, die sich in Umfangsrichtung erstrecken.

Die Figuren 3a und 3b geben den Aufbau der Spreizeinrichtung wieder. Um eine ortsfest an dem Bremsschild 3 angeordnete und daher mit Schraffur dargestellte Achse 30 ist ein Spreizhebel 31 dreh- bzw. schwenkbar. Der Spreizhebel 31 besteht einstückig aus einem längeren Hebelabschnitt 32, an dem das Spreizorgan 6 abgestützt ist, z. B. das Ende eines nach vorne zur Zugdeichsel des Fahrzeugs geführtes Bremsseils, und aus einem im Vergleich kürzeren Hebelabschnitt 33. Die beiden Hebelabschnitte 32, 33 erstrecken sich in etwa rechtwinklig zueinander.

Der kürzere Hebelabschnitt 33 weist, in Bezug auf die Achse 30 des Spreizhebels, die Kontur eines Antriebsnockens 34 auf, der gegen einen Umlenkhebel 35 abgestützt ist. Der Umlenkhebel 35 ist das unmittelbar gegen die zweite Bremsbacke 2 abgestützte, zweite Druckstück 22 der Spreizeinrichtung 5.

Gegen die andere, d. h. gegen die erste Bremsbacke 1, ist ein Spreizarm 37 abgestützt, der sich längs des längeren Hebelabschnitts 32 des Spreizhebels 31 erstreckt. Der Spreizarm 37 ist mit seinem einen Ende gegen die Abstützung S1.1 der ersten Bremsbacke 1 abgestützt und bildet mit diesem Ende das erste Druckstück 21 der Spreizeinrichtung 5. Das andere Ende des Spreizarms 37 ist über einen Gelenkbolzen 38 mit dem das zweite Druckstück 22 bildenden Umlenkhebel 35 verbunden.

Der Umlenkhebel 35 ist hier als zweiarmige Wippe gestaltet, die an der Abstützung S2.1 am Bremsbackensteg 9 der zweiten Bremsbacke 2 gelagert ist. Der Umlenkhebel 35 setzt sich aus einem ersten Hebelarm 35A und einem zweiten Hebelarm 35B zusammen. Gegen den ersten Hebelarm 35A ist der Nocken 34 des kürzeren Hebelabschnitts 33 des Spreizhebels 31 abgestützt, wohingegen der zweite Hebelarm 35B mittels des Gelenkbolzens 38 die gelenkige Verbindung zu dem Spreizarm 37 bildet. Für ein Maximum an Bewegungsfreiheit auch quer zur Spreizrichtung A1 ist der Umlenkhebel 35 nur durch den Kontakt mit dem Nocken 34 mit dem Spreizhebel 31 verbunden, und nicht über eine Gelenkachse.

Für seine Verschwenkbarkeit nach Art einer Wippe ist der Umlenkhebel 35 an seiner der Achse 30 des Spreizhebels 31 abgewandten Seite zwischen seinen beiden Hebelarmen 35A, 35B mit einer Ausnehmung 39 versehen. Mit dem Boden dieser Ausnehmung 39 stützt sich der Umlenkhebel 35 gegen die Abstützung S2.1 an der Bremsbacke 2 ab. Die Ausnehmung 39 bildet daher gemeinsam mit der Abstützung S2.1 das Schwenklager, um das der Umlenkhebel 35 in die eine oder in die andere Richtung verschwenkbar ist, um das Kräftegleichgewicht der einerseits am Spreizhebel 31, und andererseits am Spreizarm 37 wirkenden Kräfte herbeizuführen.

Das Schubelement 4 am anderen, auf der Zeichnung unteren Ende der Bremsbacken 1, 2 ist mit einer ersten Abstützung 41 gelenkig gegen das zweite Ende 1 B der ersten Bremsbacke 1, und mit einer zweiten Abstützung 42 gelenkig gegen die zweite Bremsbacke 2 abgestützt. Die gelenkige Verbindung stellt jeweils ein Bolzen 43 (Fig. 1) her, der durch eine entsprechende Bohrung im Bremsbackensteg 9 hindurchführt.

Das Schubelement 4 wirkt in Richtung seiner Schublinie A2 als ein starrer Druckstab, der zwischen den Abstützungen 41, 42 hohe Schubkräfte verlustfrei übertragen kann. Das Schubelement 4 ist nicht an dem Bremsschild 3 befestigt, vielmehr diesem gegenüber frei beweglich. Aber auch die zweiten Bremsbackenenden 1 B, 2B, die Abstützungen 41, 42 und die Gelenkbolzen 43 haben keine Verbindung zu dem Bremsschild 3, sind diesem gegenüber also frei beweglich angeordnet. Da also in diesem Teil der Bremse keine Kräfte auf das Bremsschild 3 übertragen werden, kann das Bremsschild 3 insgesamt klein und damit gewichtssparend gestaltet sein. Für das sichere Abführen der Bremsmomente auf die Fahrzeugachse reicht bereits ein Bremsschild 3 aus, welches sich im Wesentlichen auf Bereiche um die Spreizeinrichtung 5 herum beschränkt und ansonsten nur den Flansch 3A für die Befestigung an der Fahrzeugachse aufweisen muss. Um auch die auf diese Weise unverschlossenen Flächenbereiche der Trommelbremse nach fahrzeuginnen abzudecken und gegen ein Eindringen von Schmutz oder Steinschlag in das Innere der Trommelbremse zu schützen, reicht ein vergleichsweise dünnwandiges Abdeckblech aus, welches an den Bremsschild 3 angeschraubt wird.

Da beide Bremsbacken 1, 2 im Bereich ihrer zweiten Enden 1B, 2B ohne ortsfestes Widerlager sind, und da andererseits die Beweglichkeit der Bremsbacken in Umfangsrichtung begrenzt werden muss, ist das Bremsschild 3 mit einem ersten Anschlag 51 versehen (Fig. 5), an dem sich eine Abstützung S1.2 der ersten Bremsbacke 1 bei Rückwärtsfahrt R abstützt, und mit einem zweiten Anschlag 52 versehen (Fig. 4), an dem sich eine Abstützung S2.2 der zweiten Bremsbacke 2 bei Vorwärtsfahrt V abstützt. Hierzu ist in den Figuren 1 und 2 die Drehrichtung der (nicht wiedergegebenen) Bremstrommel bei Vorwärtsfahrt V und bei Rückwärtsfahrt R bezeichnet.

Beide Anschläge 51, 52 sind starr am Bremsschild 3 angeordnet, und sie befinden sich in jenem Teil der Bremse, wo sich auch die Spreizeinrichtung 5 befindet. Als Gegenanschläge dienen die Abstützungen S1.2 bzw. S2.2. Diese befinden sich an den in Umfangsrichtung weisenden Stirnseiten der gebogenen Belagträger 8.

Gemäß Fig. 4 und Fig. 5 können die festen Anschläge 51, 52 Blechabschnitte sein, die aus jenem Material, aus dem das Bremsschild 3 besteht, durch Stanzen, Umformen oder dergleichen Fertigungsverfahren hergestellt sind.

Die Radbremse ist zusätzlich mit einer Nachstelleinrichtung 60 zum Nachstellen des Lüftspiels versehen, das die Bremsbacken 1, 2 zur Reibfläche der Bremstrommel aufweisen. Die Nachstellung erfolgt an dem Schubelement 4 durch einen Mechanismus zur Änderung dessen wirksamer Länge.

Für die Nachstellung befindet sich in dem Schubelement 4 auf der Verbindungslinie A2 zwischen dessen beiden Abstützungen 41, 42 ein Gewindetrieb. Bestandteil des Gewindetriebs ist ein Nachstellrad 61, welches auf seinem Außenumfang mit einer Verzahnung 62 versehen ist. In die Verzahnung 62 greift ein Nachstellhebel 63 ein, der Bestandteil eines Mechanismus zum Umsetzen des Spreizens der Bremsbacken 1, 2 in eine Nachstellbewegung ist.

Bei der Ausführungsform nach den Figuren 1 - 5 wird die Bewegung des Nachstellhebels 63 über einen Drehstab 65, an dessen einem Ende der Nachstellhebel 63 befestigt ist, aus der Bewegung des Umlenkhebels 35 bzw. zweiten Druckstücks 22 abgeleitet. Hierzu ist der Drehstab 65 an seinem anderen Ende mit dem Druckstück 22 verbunden. Der Drehstab 65 ist im Bereich der Abstützung 42 drehbar gelagert.

Bei der Nachstellung, die entweder beim Vorhub, d. h. bei Belastung der Bremse, oder im Rückhub, d. h. bei Entlastung der Bremse, erfolgen kann, wird das in dem Schubelement 4 gelagerte, als Antriebselement des Gewindetriebs dienende Nachstellrad 61 sukzessive weiterbewegt, wodurch sich über den Gewindetrieb die wirksame Länge des Schubelements 4 zwischen seinen beiden Abstützungen 41, 42 mehr und mehr, entsprechend dem verschleißbedingten Lüftspiel der Bremsbacken, vergrößert. Von Vorteil bei dieser Lösung ist, dass keine überlagerten Bewegungen der Nachstellautomatik einerseits und der im Folgenden noch näher erläuterten Rückfahrautomatik andererseits stattfinden.

Wird bei Vorwärtsfahrt V gebremst, spreizt die Spreizeinrichtung 5 die beiden ersten Bremsbackenenden 1A, 2A voneinander weg und damit von innen gegen die Bremstrommel. Die erste Bremsbacke 1 wird durch Reibung von der Bremstrommel in Umfangsrichtung V mitgenommen. Dadurch drückt ihr anderes Ende 1 B über das als Druckstab wirkende Schubelement 4 gegen die zweite Bremsbacke 2, wodurch die zweite Bremsbacke 2 zusätzlich von innen gegen die Bremstrommel beaufschlagt wird. Auf die auflaufende Bremsbacke 2 wirken daher Kräfte sowohl unmittelbar durch das Druckstück 22 der Spreizeinrichtung 5, als auch mittelbar aufgrund der Kraftübertragung von der ersten auf die zweite Bremsbacke mittels des Schubelements 4. Sobald die auflaufende Bremsbacke 2 mit der an ihr ausgebildeten Abstützung S2.2 (Fig. 2) gegen den festen Anschlag 52 (Fig. 4) gelangt, ist die weitere Bewegung beider Bremsbacken 1, 2 in Umfangsrichtung V blockiert. Das Spreizen der Spreizeinrichtung 5 wird vollständig in Bremskraft umgesetzt.

Bei Rückwärtsfahrt R kommt es selbsttätig zur Funktion einer Rückfahrautomatik. Über die Auflaufeinrichtung des Fahrzeuganhängers kommt es zunächst wiederum zu einer Aktivierung der Spreizeinrichtung 5. Nunmehr wird die zweite Bremsbacke 2 von der Bremstrommel in Umfangsrichtung R mitgenommen. Sie übt zwar über das Schubelement 4 eine Kraft auf die erste Bremsbacke 1 aus, wobei es zu einem Kontakt zwischen der an dieser Backe 1 ausgebildeten Abstützung S1.2 und dem Anschlag 51 (Fig. 5) kommen kann, aber nicht muss. Die Rückwärtsdrehung R der Bremsbacken 1, 2 hat jedoch, wie die Figuren 3a und 3b im Vergleich zeigen, auch ein Entfernen des Umlenkhebels 35 von der ortsfesten Achse 30 des Spreizhebels 31 zur Folge, wobei der Umlenkhebel 35 nachgeführt wird, bis der Weg von der Auflaufeinrichtung erschöpft ist. Die beiden Abstützungen S1.1 und S2.1 verlagern sich dabei in Umfangsrichtung R, und die Spreizkraft an den Bremsbacken wird aufgehoben. Denn die Spreizeinrichtung 5 spreizt zwar, vermag aber keinen Spreizdruck aufzubauen. Die Folge hiervon ist eine Rückfahrautomatik.

Die Feder 10 sorgt dafür, dass bei erneuter Entlastung die bei Vorwärtsfahrt V auflaufende Bremsbacke 2 wieder mit ihrer Abstützung S2.2 gegen den Anschlag 52 (Anschlag bei Vorwärtsfahrt) drückt.

In den Figuren 6 - 9 ist eine zweite Ausführungsform der Radbremse dargestellt, wobei für gleichbedeutende und gleichwirkende Bauteile dieselben Bezugszeichen verwendet sind.

Der erste Hauptunterschied gegenüber der ersten Ausführungsform besteht in der Anordnung des Schubelements 4. Die durch die zwei Abstützungen 41, 42 definierte Schublinie A2 des Schubelements 4 ist hier unter einem Winkel von ca. 25° zu der Spreizlinie A1 der Spreizeinrichtung angeordnet. Bei der ersten Ausführungsform nach den Figuren 1 - 5 hingegen beträgt dieser Winkel nur 5 - 10°.

Bei beiden Ausführungsformen aber befindet sich die an der zweiten Bremsbacke 2 ausgebildete Abstützung 42 näher an der Spreizlinie A1, als die an der ersten Bremsbacke 1 ausgebildete Abstützung 41.

Bei der zweiten Ausführungsform nach den Figuren 6 - 9 erfolgt die zweite Abstützung 42 nicht am Ende der Bremsbacke 2, sondern in Richtung auf jenen Umfangsabschnitt der Bremsbacke 2, auf dem diese den Reibbelag 12 aufweist. Auch sind bei der zweiten Ausführungsform beide Bremsbacken 1, 2 im Wesentlichen identisch gestaltet. Bei der ersten Ausführungsform hingegen ist die auflaufende Bremsbacke 2 kürzer als die ablaufende Bremsbacke 1, so dass es beim Bremsbackenwechsel zu keinem Vertauschen der stets paarweise verbauten Backen kommen kann.

Schließlich ist bei der zweiten Ausführungsform der Mechanismus zum Umsetzen des Spreizens der Bremsbacken 1, 2 in eine Bewegung des Nachstellhebels 63 anders gelöst. An der ersten Bremsbacke 1 ist nahe dem erstem Bremsbackenende 1A ein Umlenkhebel 66 gelagert, an dem sowohl eine an der zweiten Bremsbacke 2 befestigte erste Zugstange 67, als auch eine zu der Nachstelleinrichtung führende zweite Zugstange 68 angreift. Die zweite Zugstange 68 ist mit dem nahe der Abstützung 41 gelagerten Nachstellhebel 63 gekoppelt, so dass dieser schwenken und dabei in die Verzahnung das Nachstellrades 61 greifen kann.

In den Figuren 10 - 14 ist eine dritte Ausführungsform der Radbremse dargestellt, wobei für gleichbedeutende und gleichwirkende Bauteile dieselben Bezugszeichen verwendet sind.

Unter anderem ist bei dieser dritten Ausführungsform die Spreizeinrichtung anders aufgebaut als bei den beiden ersten Ausführungsformen. Die Figuren 12a und 12b geben den Aufbau dieser Spreizeinrichtung 5 wieder. Auch hier ist um die ortsfest an dem Bremsschild 3 angeordnete und daher mit Schraffur dargestellte Achse 30 der Spreizhebel 31 dreh- bzw. schwenkbar. Der Spreizhebel 31 besteht einstückig aus dem längeren Hebelabschnitt 32, an dem das Ende des Spreizorgans 6 abgestützt ist, und aus dem im Vergleich kürzeren Hebelabschnitt 33, der sich in etwa rechtwinklig zu dem längeren Hebelabschnitt 32 erstreckt.

Der kürzere Hebelabschnitt 33 hat hier die Gestalt eines Hakens. In diesen ist ein Zugelement 36, hier zum Beispiel ein Kettenglied einer Gliederkette, eingehängt. Mit seinem anderen Ende ist das Zugelement 36 an dem einen Arm 35A des Umlenkhebels 35 eingehängt. Der Umlenkhebel 35 bildet hier das unmittelbar gegen die an der ersten Bremsbacke 1 ausgebildete Abstützung S1.1 anliegende, erste Druckstück 21 der Spreizeinrichtung 5.

Gegen die andere, d. h. gegen die links dargestellte zweite Bremsbacke 2, ist der Spreizarm 37 abgestützt, der sich auch bei dieser Ausführungsform in etwa längs des längeren Hebelabschnitts 32 des Spreizhebels 31 erstreckt. Der Spreizarm 37 ist mit seinem einen Ende gegen die Abstützung S2.1 der zweiten Bremsbacke 2 abgestützt und bildet daher mit diesem Ende das zweite Druckstück 22 der Spreizeinrichtung 5. Das andere Ende des Spreizarms 37 ist über den Gelenkbolzen 38A mit dem Umlenkhebel 35 verbunden, der das erste Druckstück 21 bildet.

Auch hier ist der Umlenkhebel 35 als zweiarmige Wippe gestaltet, jedoch hat der Spreizmechanismus eine andere Geometrie. In den ersten Hebelarm 35A des Umlenkhebels 35 ist das Zugelement 36 eingehängt, während gegen den zweiten Hebelarm 35B die Abstützung S1.1 der ersten Bremsbacke 1 anliegt. Dazu ist der Umlenkhebel 35, an seiner der Achse 30 abgewandten Seite, in seinem Hebelarm 35B mit der Ausnehmung 39 versehen, mit der er gegen die Abstützung S1.1 anliegt.

Für ein Maximum an Bewegungsfreiheit in Spreizrichtung, aber auch quer zur Spreizrichtung ist der Umlenkhebel 35 nur über das zusätzliche Zugelement 36 mit dem Spreizhebel 31 verbunden, so dass vor allem in Spreizrichtung eine kontaktfreie Zone 36A für den Ausgleich starker Bewegungen, unerwarteter Stöße etc. bleibt.

Für seine Verschwenkbarkeit nach Art einer Wippe ist der Umlenkhebel 35 zwischen seinen beiden Hebelarmen 35A, 35B an dem Spreizarm 37 gelagert, hier auf einem Gelenkbolzen 38A. Dieser Bolzen bildet daher das Gelenk, um das der Umlenkhebel 35 in die eine oder in die andere Richtung verschwenkbar ist, um das Kräftegleichgewicht zwischen den einerseits an dem Zugelement 36, und andererseits an der Abstützung S1.1 wirkenden Kräften herbeizuführen.

Das Schubelement 4 der Bremse ist, wie bei den bereits beschriebenen Ausführungsformen, an der ersten Abstützung 41 gelenkig gegen das zweite Ende 1 B der ersten Bremsbacke 1, und an der zweiten Abstützung 42 gelenkig gegen die zweite Bremsbacke 2 abgestützt. Als gelenkige Verbindungen dienen die Bolzen 43. Wiederum arbeitet das Schubelement 4 in Richtung der Schublinie A2 wie ein starrer Druckstab, der zwischen den Abstützungen 41, 42 hohe Schubkräfte verlustfrei übertragen kann. Weder das Schubelement 4, noch die zweiten Bremsbackenenden 1B, 2B, die Abstützungen 41, 42 oder die Bolzen 43 haben irgendeine Verbindung zu dem Bremsschild 3.

Abweichend zu den beiden ersten Ausführungsformen gestaltet sind der erste Anschlag 51, an dem sich die erste Bremsbacke 1 bei Rückwärtsfahrt R abstützt, und der zweite Anschlag 52, an dem sich die zweite Bremsbacke 2 bei Vorwärtsfahrt V abstützt.

Denn gemäß Fig. 13 und Fig. 14 befinden sich beide Anschläge 51, 52 an einem kreissegmentförmigen Blech 55, welches starr an dem Bremsschild 3 befestigt ist oder Teil des Bremsschildes ist. Das Blech 55 ist kreissegmentförmig so gebogen, dass seine Umfangskontur in etwa die Umfangskontur der Reibbelagträger 8 der beiden Bremsbacken aufnimmt. Die Anschläge 51, 52 befinden sich an den zwei in Umfangsrichtung weisenden Stirnflächen des Blechs 55, wobei die Bremsbacke 1 bei Rückwärtsfahrt R mit ihrem Reibbelagträger 8 gegen den Anschlag 51, und die Bremsbacke 2 bei Vorwärtsfahrt V mit ihrem Reibbelagträger 8 gegen den Anschlag 52 gelangt.

Für die Nachstellung der Bremse wird die Bewegung des Nachstellhebels 63 wiederum über den bereits beschriebenen Mechanismus, also den Drehstab 65, an dessen einem Ende der Nachstellhebel 63 befestigt ist, aus der Bewegung des Umlenkhebels 35 der Spreizeinrichtung abgeleitet. Allerdings befindet sich der Umlenkhebel 35 hier auf der anderen Bremshälfte, entsprechend befindet sich auch der Drehstab 65 in den Figuren 10, 13 und 14 auf der rechten Bremshälfte.

Gemäß Fig. 11 ist die im Einbauzustand auflaufende Bremsbacke 2 im Bereich ihres ersten Bremsbackenendes 2A mit einer in Umfangsrichtung über den Reibbelag 12 und über den Belagträger 8 hinaus reichenden Außenkontur 70 versehen, welche die Kontur der gebogenen Innenseite des Reibbelagträgers 8 in Umfangsrichtung mit gleichem Biegeverlauf fortsetzt. Mit der nach radial außen weisenden Kontur 70 stützt sich die Bremsbacke 2 an ihrem Bremsbackenende 2A von innen gegen jenes kreissegmentförmig gebogene Blech 55 ab, an dem auch der Anschlag 52 ausgebildet ist. Die Innenseite des Blechs 55 dient dabei als gebogene Führungskontur 71 für die Außenkontur 70 am Bremsbackenende 2A. Beide Konturen 70, 71 weisen die gleiche Biegung auf. Durch die Länge der Außenkontur 70 in Umfangsrichtung ist sichergestellt, dass die an dem Belagträger 8 ausgebildete Abstützung S2.2 in jedem Fall gegen den zweiten Anschlag 52 geführt wird, und es nicht etwa zu einem Kontakt an anderer Stelle kommt.

Die Feder 10 sorgt dafür, dass die Bremsbacke 2 stets in Kontakt mit dem Druckstück 22 der Spreizeinrichtung 5 bleibt. Die Feder 10 kann zusätzlich die Funktion übernehmen, den Spreizhebel 31 stets in seine Stellung nach Fig. 12a zurückzuziehen.

Wird bei Vorwärtsfahrt V gebremst, spreizt die Spreizeinrichtung 5 die beiden ersten Bremsbackenenden 1A, 2A voneinander weg und damit von innen gegen die Bremstrommel. Die erste Bremsbacke 1 wird durch Reibung von der Bremstrommel in Umfangsrichtung V mitgenommen. Dadurch drückt ihr anderes Ende 1 B über das als Druckstab wirkende Schubelement 4 gegen die zweite Bremsbacke 2, wodurch die zweite Bremsbacke 2 zusätzlich von innen gegen die Bremstrommel beaufschlagt wird. Auf die auflaufende Bremsbacke 2 wirken daher Kräfte sowohl unmittelbar durch das Druckstück 22 der Spreizeinrichtung, als auch mittelbar aufgrund der Kraftübertragung von der ersten auf die zweite Bremsbacke mittels des Schubelements 4. Sobald die auflaufende Bremsbacke 2 mit der an ihr ausgebildeten Abstützung S2.2 (Fig. 11) gegen den festen Anschlag 52 (Fig. 13) gelangt, ist die weitere Bewegung beider Bremsbacken in Umfangsrichtung V blockiert. Das Spreizen der Spreizeinrichtung 5 wird vollständig in Bremskraft umgesetzt.

Bei Rückwärtsfahrt R kommt es selbsttätig zur Funktion der Rückfahrautomatik. Über die Auflaufeinrichtung des Fahrzeuganhängers kommt es zunächst wiederum zu einer Aktivierung der Spreizeinrichtung 5. Nunmehr wird die zweite Bremsbacke 2 von der Bremstrommel in Umfangsrichtung R mitgenommen. Sie übt zwar über das Schubelement 4 eine Kraft auf die erste Bremsbacke 1 aus, wobei es zu einem Kontakt zwischen der an dieser Backe 1 ausgebildeten Abstützung S1.2 (Fig. 11) und dem Anschlag 51 (Fig. 14) kommen kann, aber nicht muss. Die Rückwärtsdrehung R der Bremsbacken 1, 2 hat jedoch, wie die Figuren 12a und 12b im Vergleich zeigen, auch ein Annähern des Umlenkhebels 35 an die ortsfeste Achse 30 des Spreizhebels 31 zur Folge, wobei der Umlenkhebel 35 nachgeführt wird, bis der Weg von der Auflaufeinrichtung erschöpft ist. Die beiden Abstützungen S1.1 und S2.1 verlagern sich dabei in Umfangsrichtung R, und die Spreizkraft an den Bremsbacken wird aufgehoben. Denn die Spreizeinrichtung 5 spreizt zwar, vermag aber keinen Spreizdruck aufzubauen. Die Folge hiervon ist die Rückfahrautomatik.

### Bezugszeichenliste

- 1: erste Bremsbacke
- 1A: erstes Bremsbackenende
- 1B: zweites Bremsbackenende
- 2: zweite Bremsbacke
- 2A: erstes Bremsbackenende
- 2B: zweites Bremsbackenende
- 3: Bremsschild
- 3A: Flansch
- 3B: Befestigungsöffnung
- 4: Schubelement
- 5: Spreizeinrichtung
- 6: Bremsorgan
- 8: Reibbelagträger
- 9: Bremsbackensteg
- 9A: Rand
- 10: Feder
- 11: erster Reibbelag
- 12: zweiter Reibbelag
- 13: Befestigung für Feder
- 16: Feder
- 17: Langloch
- 21: Druckstück
- 22: Druckstück
- 30: Achse
- 31: Spreizhebel
- 32: längerer Hebelabschnitt
- 33: kürzerer Hebelabschnitt
- 34: Nocken
- 35: Umlenkhebel
- 35A: erster Hebelarm
- 35B: zweiter Hebelarm
- 36: Zugelement
- 37: Spreizarm
- 38: Gelenkbolzen, Gelenk
- 38A: Gelenkbolzen, Gelenk
- 39: Ausnehmung
- 41: Abstützung
- 42: Abstützung
- 43: Bolzen
- 51: Anschlag bei Rückwärtsfahrt
- 52: Anschlag bei Vorwärtsfahrt
- 55: Blech
- 60: Nachstelleinrichtung
- 61: Nachstellrad
- 62: Verzahnung
- 63: Nachstellhebel
- 65: Drehstab
- 66: Umlenkhebel
- 67: Zugstange
- 68: Zugstange
- 70: Außenkontur
- 71: Führungskontur

- A: Achse
- A1: Spreizlinie der Spreizeinrichtung
- A2: Schublinie
- B: Breite der Abstützung
- S1.1: Abstützung
- S1.2: Abstützung
- S2.1: Abstützung
- S2.2: Abstützung
- R: Rückwärtsdrehung (Rückwärtsfahrt)
- V: Vorwärtsdrehung (Vorwärtsfahrt)

## Patentansprüche

1. Trommelbremse für ein Fahrzeug mit
- einer auf einer Drehachse (A) gelagerten Bremstrommel,
- einem achsfest angeordneten Bremsschild (3),
- einer erste Bremsbacke (1), die in Umfangsrichtung beweglich angeordnet und mit einem über einen Umfangsabschnitt sich erstreckenden Reibbelag (11) versehen ist, sowie einer zweiten Bremsbacke (2), die in Umfangsrichtung beweglich angeordnet und mit einem über einen Umfangsabschnitt sich erstreckenden Reibbelag (12) versehen ist,
- einer durch ein Bremsorgan (6), vorzugsweise ein Bremsseil, betätigbaren Spreizeinrichtung (5), welche mit einem ersten Druckstück (21) gegen das erste Ende (1A) der ersten Bremsbacke (1), und mit einem zweiten Druckstück (22) gegen das erste Ende (2A) der zweiten Bremsbacke (2) abgestützt ist,
- einer die zweite Bremsbacke (2) gegen die Spreizeinrichtung (5) beaufschlagenden Feder (10),
- einer Rückfahrautomatik zum zumindest teilweisen Aufheben der Bremswirkung bei Rückwärtsfahrt des Fahrzeugs,
**dadurch gekennzeichnet,**
**dass** das Bremsschild (3) zur Begrenzung der Beweglichkeit der Bremsbacken (1, 2) in Umfangsrichtung mit einem ersten Anschlag (51) zur Abstützung des ersten Bremsbackenendes (1A) der ersten Bremsbacke (1) bei Rückwärtsfahrt (R) und mit einem zweiten Anschlag (52) zur Abstützung des ersten Bremsbackenendes (2A) der zweiten Bremsbacke (2) bei Vorwärtsfahrt (V) versehen ist, und dass ein relativ zu dem Bremsschild (3) frei bewegliches Schubelement (4) mit einer ersten Abstützung (41) gelenkig gegen das zweite Ende (1 B) der ersten Bremsbacke (1) und mit einer zweiten Abstützung (42) gelenkig gegen die zweite Bremsbacke (2) anliegt.

2. Trommelbremse nach Anspruch 1, **dadurch gekennzeichnet, dass** die zweite Bremsbacke (2) einen gebogenen Reibbelagträger (8), an dem die Abstützung (S2.2) ausgebildet ist, mit der die zweite Bremsbacke (2) bei Vorwärtsfahrt (V) gegen den zweiten Anschlag (52) abstützbar ist, sowie in Verlängerung des Reibbelagträgers (8) eine Außenkontur (70) aufweist, deren Biegung der des Reibbelagträgers (8) entspricht, und die radial gegen eine Führungskontur (71) an dem Bremsschild (3) abgestützt ist.

3. Trommelbremse nach Anspruch 2, **dadurch gekennzeichnet, dass** sich die Führungskontur (71) von dem zweiten Anschlag (52) aus in Umfangsrichtung erstreckt, vorzugsweise mit einer Biegung, die gleich ist der Biegung der Außenkontur (70).

4. Trommelbremse nach einem der vorangehenden Ansprüche, **dadurch gekennzeichnet, dass** sich die Bremsbacken (1, 2) jeweils aus einem gebogenen Reibbelagträger (8) und mindestens einem an dessen Innenseite befestigten Bremsbackensteg (9) zusammensetzen, und dass Bestandteil jeder der beiden Abstützungen (41, 42) ein Bolzen (43) ist, der durch den jeweiligen Bremsbackensteg (9) hindurchgeführt ist.

5. Trommelbremse nach einem der vorangehenden Ansprüche, **dadurch gekennzeichnet, dass** diese mit einer Nachstelleinrichtung (60) für das Lüftspiel zwischen den Bremsbacken (1, 2) und der Bremstrommel versehen ist, und dass Bestandteil der Nachstelleinrichtung (60) ein Antriebselement (61) eines Getriebes zum Einstellen der Länge des Schubelements (4) ist.

6. Trommelbremse nach Anspruch 5, **dadurch gekennzeichnet, dass** das Getriebe einen Gewindetrieb aufweist, der in dem Schubelement (4) auf der Verbindungslinie (A2) zwischen den beiden Abstützungen (41, 42) angeordnet ist.

7. Trommelbremse nach Anspruch 5 oder 6, **dadurch gekennzeichnet, dass** Bestandteil der Nachstelleinrichtung (60) ein in eine Verzahnung an dem Antriebselement (61) hinein beweglicher Nachstellhebel (63) ist, und dass ein Mechanismus zum Umsetzen des Spreizens der Bremsbacken (1, 2) in eine Bewegung des Nachstellhebels (63) vorgesehen ist.

8. Trommelbremse nach einem der vorangehenden Ansprüche, **dadurch gekennzeichnet, dass** die Spreizeinrichtung (5) aufweist
- einen Spreizhebel (31), der um eine an dem Bremsschild (3) ortsfest angeordnete Achse (30) drehbeweglich ist und einen längeren Hebelabschnitt (32), an dem das Spreizorgan (6) abgestützt ist, und einen kürzeren Hebelabschnitt (33) aufweist,
- einen gegen eine der beiden Bremsbacken abgestützten, zweiarmigen Umlenkhebel (35), gegen dessen einen Hebelarm (35A) der kürzere Hebelabschnitt (33) des Spreizhebels (31) abgestützt ist,
- einen gegen die andere der beiden Bremsbacken abgestützten Spreizarm (37), der gelenkig mit dem Umlenkhebel (35) verbunden ist.

9. Trommelbremse nach Anspruch 8, **dadurch gekennzeichnet, dass** der kürzere Hebelabschnitt (33) mittels eines Zugelements (36) gegen den Hebelarm (35A) des Umlenkhebels (35) abgestützt ist.

10. Trommelbremse nach Anspruch 8 oder 9, **dadurch gekennzeichnet, dass** der Umlenkhebel (35) mit seinem anderen Hebelarm (35B) direkt gegen die eine der beiden Bremsbacken abgestützt ist.

11. Trommelbremse nach einem der Ansprüche 8 - 10, **dadurch gekennzeichnet, dass** sich der Spreizarm (37) längs des längeren Hebelabschnitts (32) des Spreizhebels (31) erstreckt.

12. Trommelbremse nach einem der Ansprüche 8 bis 11, **dadurch gekennzeichnet, dass** der Umlenkhebel (35) an seiner der Achse (30) des Spreizhebels (31) abgewandten Seite mit einer Ausnehmung (39) versehen ist, und er mit der Ausnehmung (39) gegen die Bremsbacke abgestützt ist.

13. Trommelbremse nach einem der Ansprüche 8 bis 12, **dadurch gekennzeichnet, dass** die zweite Bremsbacke (2) gegen den Spreizarm (37), und dass die erste Bremsbacke (1) gegen den Umlenkhebel (35) abgestützt ist.

14. Bremsbackenpaar für eine Trommelbremse mit, für jede Bremsbacke (1, 2), einem mit gebogenen Außen- und Innenseiten versehenen Bremsbelagträger (8), an dessen Außenseite ein Reibbelag (11, 12), und an dessen Innenseite ein Bremsbackensteg (9) befestigt ist, wobei der Bremsbackensteg (9) der im Einbauzustand auflaufenden Bremsbacke (2) mit einer Federbefestigung (13) für eine die Bremsbacke (2) nach innen beaufschlagende Feder versehen ist, und wobei die Bremsbacken (1, 2)
- im Bereich ihrer ersten, im Einbauzustand einander angenäherten Enden (1A, 2A) mit ersten Abstützungen (S1.1, S2.1) für eine die Bremsbacken (1, 2) voneinander weg beaufschlagende Spreizeinrichtung, und mit zweiten Abstützungen (S1.2, S2.2) zur Begrenzung der Backenbeweglichkeit in Umfangsrichtung versehen sind,
- im Bereich ihrer zweiten Enden (1B, 2B) mit weiteren Abstützungen (41, 42) versehen sind, die einander zugewandt an den Bremsbackenstegen (9) ausgebildet sind.

15. Bremsbackenpaar nach Anspruch 14, **dadurch gekennzeichnet, dass** die ersten Abstützungen (S1.1, S2.1) jeweils am Bremsbackensteg (9), und die zweiten Abstützungen (S1.2, S2.2) jeweils am Belagträger (8) ausgebildet sind.

16. Bremspackenpaar nach Anspruch 15, **dadurch gekennzeichnet, dass** sich die ersten Abstützungen (S1.1, S2.1) an Einsenkungen befinden, die an einander zugewandten Rändern (9A) der Bremsbackenstege (9) ausgebildet sind.

17. Bremsbackenpaar nach einem der Ansprüche 14 bis 16, **dadurch gekennzeichnet, dass** an der auflaufenden Bremsbacke (2) die Befestigung (13) für die Zugfeder zwischen der ersten Abstützung (S2.1) und der weiteren Abstützung (41, 42), jedoch näher an der ersten Abstützung (S2.1), angeordnet ist.

18. Bremsbackenpaar nach einem der Ansprüche 14 bis 17, **dadurch gekennzeichnet, dass** die weiteren Abstützungen (41, 42) jeweils Bohrungen zur Aufnahme jeweils eines Bolzens sind.

19. Bremsbackenpaar nach einem der Ansprüche 14 - 18, **dadurch gekennzeichnet, dass** die im Einbauzustand auflaufende Bremsbacke (2) im Bereich ihres ersten Endes (2A) eine in Verlängerung des Reibbelagträgers (8) angeordnete Außenkontur (70) aufweist, deren Biegung der des Reibbelagträgers (8) entspricht.
